(19) Europäisches Patentamt
European Patent Office
Office européen des brevets

(11) **EP 3 392 492 A1**

(12) **EUROPEAN PATENT APPLICATION**
published in accordance with Art. 153(4) EPC

(43) Date of publication:
**24.10.2018 Bulletin 2018/43**

(51) Int Cl.:
**F02D 45/00** *(2006.01)*    **F02D 23/00** *(2006.01)*

(21) Application number: **15910720.0**

(86) International application number:
**PCT/JP2015/085260**

(22) Date of filing: **16.12.2015**

(87) International publication number:
**WO 2017/104030 (22.06.2017 Gazette 2017/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **Applied Electronics Corporation**
**Kawasaki-shi, Kanagawa 214-0023 (JP)**
• **Tomonari, Kengo**
**Kawasaki-shi, Kanagawa 214-0023 (JP)**

(72) Inventors:
• **YOSHIDA, Hiroyuki**
**Kawasaki-shi, Kanagawa 214-0023 (JP)**
• **SHOJI, Kazuichi**
**Kawasaki-shi, Kanagawa 214-0023 (JP)**
• **IWAMOTO, Hironori**
**Kawasaki-shi, Kanagawa 214-0023 (JP)**

(74) Representative: **AWA Sweden AB**
**Junkersgatan 1**
**582 35 Linköping (SE)**

(54) **INTERNAL COMBUSTION ENGINE**

(57)    An internal combustion engine (100) comprising: a compressor wheel (62) that is driven by the energy of exhaust gas expelled from each cylinder (10) of an engine body (1), has at least one blade (622), and compresses air that is taken into each cylinder (10); a passage detection sensor (301) that detects that a blade (622) has passed through a prescribed location within a housing (61), said housing (61) housing the compressor wheel (62); a combustion status estimation device (300) that is configured so as to calculate the angular velocity of the compressor wheel (62) on the basis of the detection results from the passage detection sensor (301), and to calculate the combustion energy of the engine body (1) and/or the combustion interval of each cylinder (10) on the basis of the angular velocity of the compressor wheel (62); and a control device (200) that is configured so as to control parameters relating to combustion for each cylinder (10), said control being performed on the basis of the combustion energy of each cylinder (10) and/or the combustion interval of each cylinder (10), said combustion energy of each cylinder (10) and/or combustion interval of each cylinder (10) having been calculated by the combustion status estimation device (300).

FIG. 1

EP 3 392 492 A1

## Description

FIELD

The present invention relates to an internal combustion engine.

BACKGROUND

JP2015-34780A discloses to calculate an angular velocity of a rotor having a plurality of blades, such as a compressor wheel of an exhaust turbocharger of an internal combustion engine, based on an output value of an eddy current sensor detecting passage of each blade.

SUMMARY

However, if trying to perform various processing by a control device of an internal combustion engine based on the calculated angular velocity of the compressor wheel, there is the problem that a processing load of the control device of the internal combustion engine will become larger.

The present invention was made focusing on this problem and has as its object to keep down the processing load of the control device of an internal combustion engine while enabling various processing based on the angular velocity of the compressor wheel.

To solve this problem, the internal combustion engine according to one aspect of the present invention comprises an engine body having a plurality of cylinders, a compressor wheel driven by energy of exhaust discharged from each cylinder of the engine body, having at least one blade, and compressing air taken into each cylinder of the engine body, a passage detection sensor for detecting a predetermined position in a housing holding the compressor wheel being passed by a blade of the compressor wheel, a combustion state estimating device configured to calculate an angular velocity of the compressor wheel based on the results of detection of the passage detection sensor and to calculate at least one of a combustion energy of each cylinder of the engine body and a combustion interval of each cylinder based on the angular velocity of the compressor wheel, and a control device configured to control a parameter relating to combustion in each cylinder of the engine body based on at least one of the combustion energy of each cylinder and combustion interval of each cylinder calculated by the combustion state estimating device.

According to the internal combustion engine according to this aspect of the present invention, it is possible to keep down the processing load of the control device while able to calculate at least one of a combustion energy of each cylinder of the engine body and a combustion interval of each cylinder based on the angular velocity of the compressor wheel.

BRIEF DESCRIPTION OF DRAWINGS

[FIG. 1] FIG. 1 is a schematic view of a configuration of an internal combustion engine according to one embodiment of the present invention.
[FIG. 2A] FIG. 2A is a schematic cross-sectional view of a compressor.
[FIG. 2B] FIG. 2B is a schematic plan view of a compressor wheel.
[FIG. 3] FIG. 3 is a view for explaining a principle of detection of an eddy current sensor as a passage detection sensor.
[FIG. 4A] FIG. 4A is a view showing a trend in output value in the case of using an eddy current sensor as a passage detection sensor.
[FIG. 4B] FIG. 4B is a view showing a trend in output value in the case of using an eddy current sensor as a passage detection sensor.
[FIG. 5] FIG. 5 is a view showing one example of the results of calculation of an angular velocity of a compressor wheel in the case of making the compressor wheel rotate by a constant angular velocity.
[FIG. 6] FIG. 6 is a schematic plan view of a compressor wheel with blades in which shape error has occurred.
[FIG. 7] FIG. 7 is a view showing trends in angular velocity and kinetic energy of a rotor of an exhaust turbocharger in one cycle of an internal combustion engine.
[FIG. 8] FIG. 8 is a view for explaining a method of calculation of a combustion energy of each cylinder and a combustion interval of each cylinder.
[FIG. 9] FIG. 9 is a flow chart for explaining control for calculation of an angular velocity of a compressor wheel according to one embodiment of the present invention.
[FIG. 10] FIG. 10 is a flow chart for explaining control for estimation of the combustion energy of each cylinder of an engine body according to one embodiment of the present invention.
[FIG. 11] FIG. 11 is a flow chart for explaining control for estimation of the combustion interval of each cylinder of an engine body according to one embodiment of the present invention.

DESCRIPTION OF EMBODIMENTS

Below, referring to the drawings, embodiments of the present invention will be explained in detail. Note that, in the following explanation, similar component elements are assigned the same reference notations.

Overall Configuration

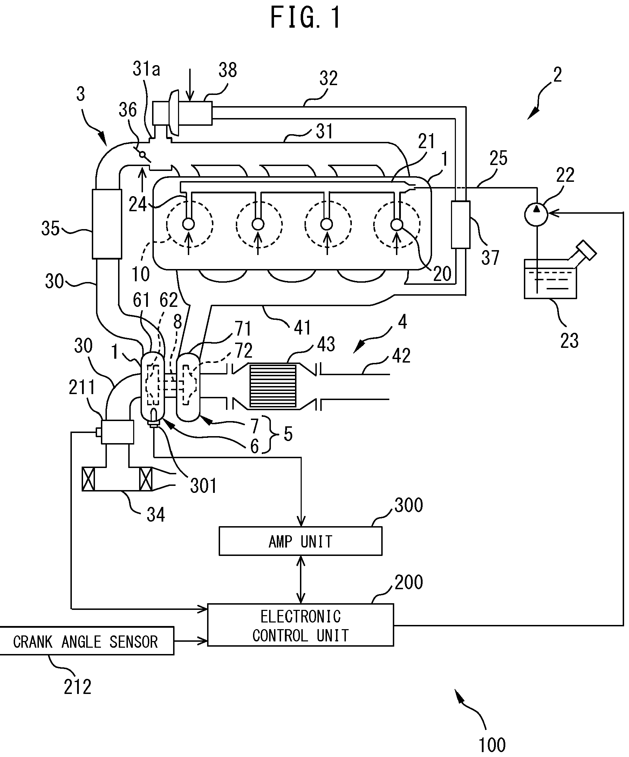

FIG. 1 is a schematic view of the configuration of an internal combustion engine 100 according to one embodiment of the present invention.

The internal combustion engine 100 comprises an engine body 1, fuel injection system 2, intake system 3, exhaust system 4, and electronic control unit 200 for controlling the internal combustion engine 100. The internal combustion engine 100 is a so-called multicylinder internal combustion engine with an engine body 1 having a plurality of cylinders.

The engine body 1 burns fuel in a combustion chamber formed in each cylinder 10 to, for example, generate power for driving a vehicle etc. In the present embodiment, the engine body 1 has four cylinders 10, but so long as there are a plurality of cylinders, the number of cylinders is not limited to four. Further, in the present embodiment, the engine body 1 burns fuel in a combustion chamber by compression ignition, but the method of combustion of the fuel is also not particularly limited. It is also possible to burn fuel in a combustion chamber by spark ignition.

The fuel injection system 2 comprises electronic control type fuel injectors 20, a common rail 21, a supply pump 22, and a fuel tank 23.

One fuel injector 20 is provided at each cylinder 10 to face a combustion chamber of the cylinder 10. The opening time (injection time) and opening timing (injection timing) of the fuel injector 20 are changed by a control signal from the electronic control unit 200. If the fuel injector 20 is opened, fuel is injected from the fuel injector 20 to the inside of the combustion chamber. Each fuel injector 20 is connected through an injection pipe 24 to the common rail 21.

The common rail 21 is connected through a pumping pipe 25 to the fuel tank 23. In the middle of the pumping pipe 25, a supply pump 22 is provided for pressurizing the fuel stored in the fuel tank 23 and supplying it to the common rail 21. The common rail 21 temporarily stores the high pressure fuel pumped from the supply pump 22. If the fuel injector 20 is opened, the high pressure fuel stored in the common rail 21 is injected through an injection pipe 24 from a fuel injector 20 to the inside of a combustion chamber.

The supply pump 22 is configured to enable the amount of discharge to be changed. The amount of discharge of the supply pump 22 is changed by a control signal from the electronic control unit 200. By controlling the amount of discharge of the supply pump 22, the fuel pressure inside the common rail 21, that is, the injection pressure of a fuel injector 20, is controlled.

The intake system 3 is a system for guiding intake to the inside of a cylinder and comprises an intake passage 30, intake manifold 31, and EGR passage 32.

The intake passage 30 is connected at one end to an air cleaner 34 and is connected at another end to an intake collector 31a of an intake manifold 31. At the intake passage 30, in order from the upstream side, an air flow meter 211, a compressor 6 of a turbocharger 5, an intercooler 35, and a throttle valve 36 are provided.

The air flow meter 211 detects the flow rate of intake taken in through the air cleaner 34 to the intake passage 30 (below, referred to as the "intake amount").

The compressor 6 comprises a compressor housing 61 and a compressor wheel 62 arranged inside the compressor housing 61. The compressor wheel 62 is driven to rotate by a turbine wheel 72 of a turbocharger 5 attached coaxially via a shaft 8 and compresses and discharges intake which had flowed to the inside of the compressor housing 61.

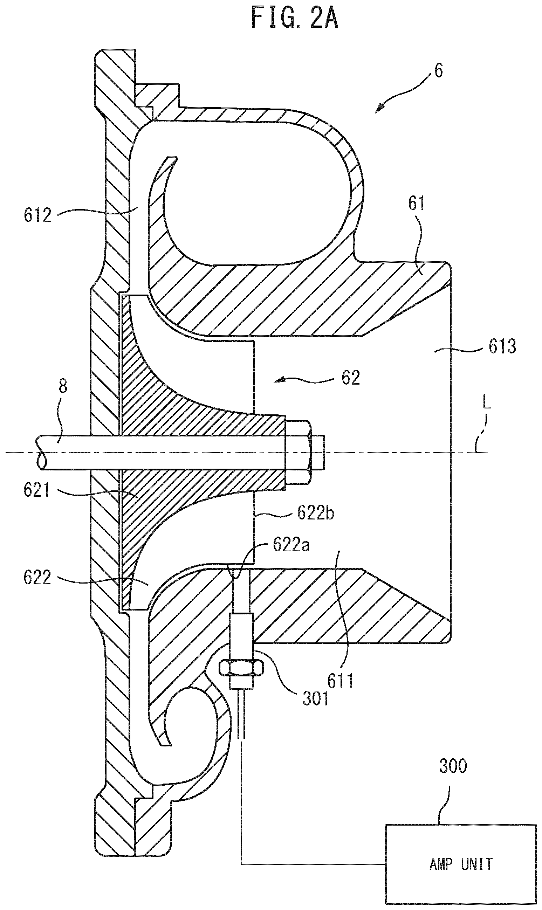

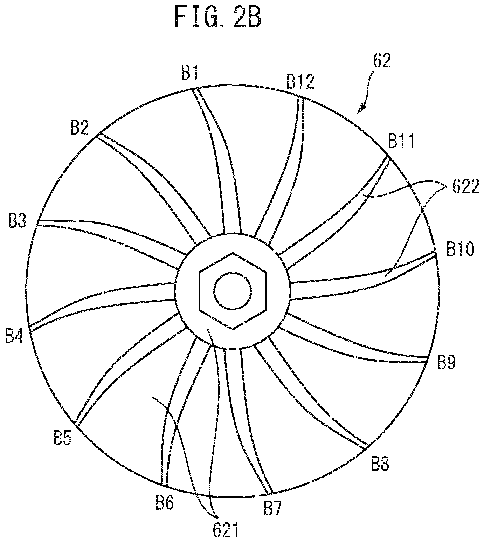

Further, in the present embodiment, at the compressor housing 61, a passage detection sensor 301 is attached. An output signal of the passage detection sensor 301 is input to an amp unit 300. The amp unit 300 is configured to be able to calculate the angular velocity of the compressor wheel 62 based on the output result of the passage detection sensor 301 and to be able to estimate the combustion state of each cylinder 10 such as the combustion energy of each cylinder 10 or the combustion interval of each cylinder 10 of the engine body 1 based on the angular velocity of the compressor wheel 62. Details of the passage detection sensor 301 and amp unit 300 will be explained later from FIG. 2 on.

The intercooler 35 is a heat exchanger for cooling the intake which had been compressed by the compressor 6 and became a high temperature by, for example, running wind, cooling water, etc.

The throttle valve 36 changes a passage cross-sectional area of the intake passage 30 so as to adjust the amount of intake introduced into the intake manifold 31. The throttle valve 36 is driven to open and close by a throttle actuator (not shown). A throttle sensor (not shown) is used to detect the opening degree (throttle opening degree).

The intake manifold 31 is connected to the engine body 11 and evenly distributes the intake which had flowed in from the intake passage 30 to the cylinders 10.

The EGR passage 32 is a passage for connecting an exhaust manifold 41 and intake collector 31a of the intake manifold 31 and returning part of the exhaust discharged from each cylinder 10 to the intake collector 31a by the pressure difference. Below, the exhaust flowing into the EGR passage 32 will be referred to as "EGR gas". By refluxing the EGR gas to the intake collector 31a and in turn each cylinder 10, it is possible to reduce the combustion temperature to suppress the discharge of nitrogen oxides ($NO_X$). In the EGR passage 32, in order from the upstream side, an EGR cooler 37 and EGR valve 38 are provided.

The EGR cooler 37 is a heat exchanger for cooling the EGR gas by, for example, running wind, cooling water, etc.

The EGR valve 38 is a solenoid valve able to adjust the opening degree continuously or in stages. The opening degree is controlled by the electronic control unit 200. By controlling the opening degree of the EGR valve 38 and adjusting the flow rate of the EGR gas made to reflux to the intake collector 31a, the EGR rate (ratio of EGR gas in the intake) is controlled.

The exhaust system 4 is a system for discharging exhaust from inside the cylinders and is comprised of the exhaust manifold 41 and exhaust passage 42.

The exhaust manifold 41 is connected to the engine body 1. It collects the exhaust discharged from each cylinder 10 and introduces it to the exhaust passage 42.

At the exhaust passage 42, in order from the upstream side, a turbine 7 of the turbocharger 5 and an exhaust post-treatment device 43 are provided.

The turbine 7 is comprised of a turbine housing 71 and the turbine wheel 72 arranged inside the turbine housing 71. The turbine wheel 72 is driven to rotate by the energy of the exhaust flowing into the turbine housing 71 and drives the compressor wheel 62 attached coaxially with it.

The exhaust post treatment device 43 is a device for cleaning the exhaust then discharging it to the outside air and is provided with various types of catalysts for removing harmful substances, filters for catching harmful substances, etc.

The electronic control unit 200 is comprised of a digital computer and is comprised of components connected to each other by a bidirectional bus such as a ROM (read only memory), RAM (random access memory), CPU (microprocessor), input port, and output port.

The electronic control unit 200 receives as input through the input port the output signal of the above-mentioned air flow meter 211 and, as a signal for calculating the engine speed, an output signal of a crank angle sensor 212 generating an output pulse each time a crankshaft of the engine body 1 rotates by, for example, 15° etc. In this way, the electronic control unit 200 receives an input through the input port the output signals of various types of sensors required for controlling the internal combustion engine 100.

Further, the electronic control unit 200 is electrically connected to the fuel injectors 20 and fuel pump 22, step motor of the throttle valve 36, EGR control valve 38, and other control parts through the output port.

Further, the electronic control unit 200 is connected with the amp unit 300 by a CAN (Controller Area Network) communication line and is designed to send and receive data by CAN communication. In the present embodiment, the combustion state of each cylinder 10 of the engine body 1 estimated by the amp unit 300 is sent to the electronic control unit 200. Further the electronic control unit 200 according to the present embodiment is configured to be able to control a parameter relating to combustion in each cylinder 10, that is, the amount of fuel injection, the amount of intake air, the amount of EGR gas, etc. in accordance with the combustion state of each cylinder 10 of the engine body 1 sent from the amp unit.

Constitution of Compressor

FIG. 2A is a schematic cross-sectional view of the compressor 6. FIG. 2B is a schematic plan view of a compressor wheel (impeller) 62.

As shown in FIG. 2A, the compressor wheel 62 is comprised of a center member 621 connected to the turbine wheel 72 of the turbocharger 5 (see FIG. 1) through the shaft 8 and a plurality of blades 622 extending from the surface of the center member 621 in the radial direction and axial direction of the compressor wheel 62. The center member 621 is fixed to the shaft 8 so that the axis L becomes coaxial with the axis of the shaft 8.

The compressor wheel 62 is arranged inside of the compressor housing 61 so as to be able to rotate about the axis L. Further, the compressor wheel 62 is arranged inside the compressor housing 61 so that when it rotates, the radial direction ends of the blades 622 are slightly spaced away from the inside circumferential surface of the compressor housing 61 and in that state move in the peripheral direction along the inside circumferential surface.

Further, as shown in FIG. 2B, the compressor wheel 62 according to the present embodiment has 12 blades 622 of the same shapes arranged at equal intervals. In FIG. 2B, to facilitate the explanation, the blades 622 are assigned identifying numbers of B1 to B12. Note that, the number of blades 622 is not limited to 12 and may be greater than 12 or less than 12. In the present embodiment, each blade 622 is configured to extend in the radial direction and axial direction of the compressor wheel 62. However, the plurality of blades 622 may be any shapes such as curved shapes so long as able to compress the fluid flowing into the compressor 6. Further, the blades 622 do not necessarily have to be arranged at equal intervals. Part or all of the blades 622 may be shapes different from the other blades.

Returning to FIG. 2A, the compressor housing 61 has a center passage 611 extending through the center of the compressor housing 61 and a ring-shaped passage 612 extending around the center passage 611. One end part of the center passage 611 is open and forms an inlet 613 into which the fluid flows. Further, a ring-shaped passage 612 is arranged around the other end part of the center passage 611. At the inside of this ring-shaped passage 612, a compressor wheel 62 is arranged inside the center passage 611. Therefore, the fluid flowing in from the inlet 613 passes through the center passage 611 and flows out through the compressor wheel 62 to the ring-shaped passage 612.

Passage Detection Sensor

Further, at the compressor housing 61, to detect the passage of a blade 622 through a predetermined angular position (predetermined position) inside the compressor housing 61, a passage detection sensor 301 is attached. The passage detection sensor 301 detects the passage of a blade 622 in front of the detecting part of the passage detection sensor 301. In the present embodiment, the passage detection sensor 301 is attached to the compressor housing 61 so as to face the radial direction end face 622a of the blade 622 of the compressor wheel 62 and so as to become substantially parallel to the normal direction of the radial direction end face 622a of the blade 622.

Further, the passage detection sensor 301 is attached to the compressor housing 61 so as to be positioned at the inlet side of the compressor wheel 62. In the present embodiment, the passage detection sensor 301 is attached to the compressor housing 61 so as to adjoin the inlet side end faces 622b of the blades 622 of the compressor wheel 62. Here, the blades 622 of the compressor wheel 62 become gradually higher in temperature from the inlet side to the outlet side. This is because the fluid flowing through the compressor wheel 62 is pressurized from the inlet side toward the outlet side. In the present embodiment, the passage detection sensor 301 is attached to the housing 3 so as to be positioned at the inlet side of the compressor wheel 62, so is arranged at the relatively low temperature region. For this reason, the effect of heat to the passage detection sensor 301 can be reduced.

The amp unit 300 receives as input the output value of the passage detection sensor 301. The amp unit 300 is comprised of an amplifier amplifying the output value of the passage detection sensor 301 and a CPU (microprocessor) utilizing the output value amplified by the amplifier to calculate the angular velocity of the compressor wheel 62 etc. joined together. In the present embodiment, the passage detection sensor 301 and the amp unit 300 are made separate members, but the passage detection sensor 301 may also house the amp unit 300 so as to make the passage detection sensor 301 and amp unit 300 be integrally provided.

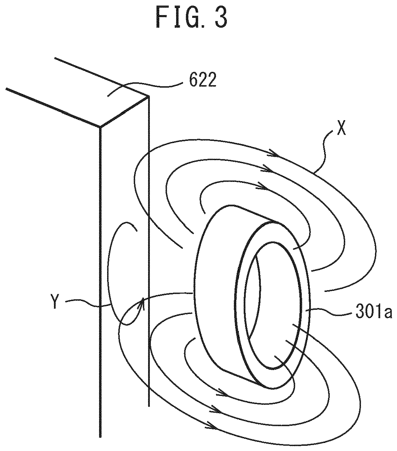

Further, in the present embodiment, an eddy current sensor is used as the passage detection sensor 301. An eddy current sensor is a sensor outputting a voltage value corresponding to the distance between a sensor detecting part and a metal substance being measured. Below, referring to FIG. 3, the principle of detection of the eddy current sensor will be simply explained.

The eddy current sensor has a coil 301a generating a magnetic field by an AC excitation current at the detecting part. If a blade 622 passes through the magnetic field X generated by the coil 301a, an eddy current Y is generated at the blade 622 so as to cancel out the magnetic field generated by the coil 301a. The intensity of the magnetic field X changes due to the eddy current generated at the blade 622 and, as a result, the value of the current flowing through the coil 301a changes. Therefore, by detecting a change of the voltage value derived from the change of the current value flowing through the coil 301a by the eddy current sensor, it is possible to detect if a blade 622 has passed. Specifically, the time when the output value of the eddy current sensor has peaked can be judged as the time when a blade 622 has passed in front of the detecting part of the eddy current sensor 5 (that is, a predetermined angular position inside the compressor housing 61).

Note that, as the passage detection sensor 301 for detecting passage of a blade 622, any sensor may be used so long as able to detect passage of the blade 622. As such a sensor, for example, a magnetic pickup (MPU) sensor may be mentioned. An MPU sensor is a sensor having a magnet and a detection coil in a detecting part. In such an MPU sensor, if the magnetic member of the blade approaches or moves away from the MPU sensor, the magnetic flux passing through the detection coil changes. Along with this, the induced electromotive force of the detection coil changes. Due to this, it is possible to detect the passage of a blade 622 at the front of the detecting part of the MPU sensor. In the following explanation the case of use of the eddy current sensor as the passage detection sensor 301 will be explained.

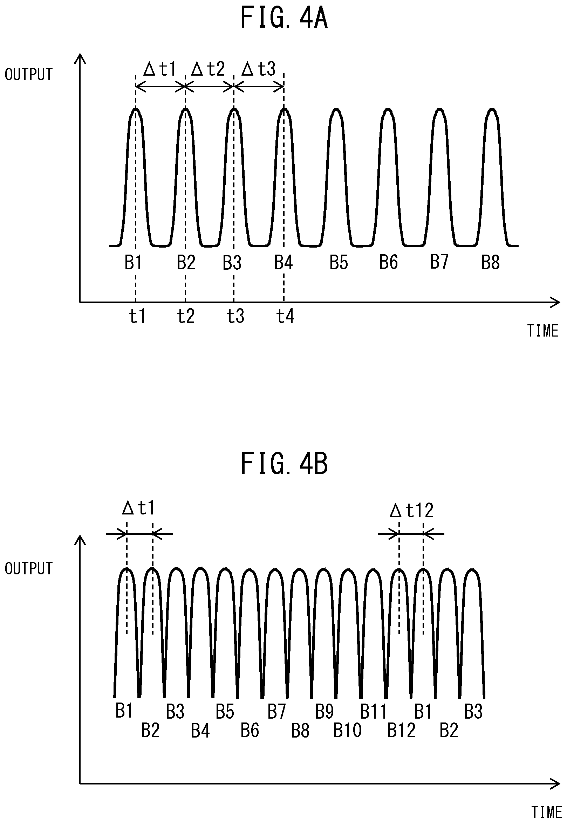

FIG. 4A and FIG. 4B are views showing the trend in the output value (voltage value) of the passage detection sensor 301 in the case of using the eddy current sensor as the passage detection sensor 301. FIG. 4A shows the trend in the output value in the case where the angular velocity of the compressor wheel 62 is relatively slow (for example, speed of compressor wheel 62 is 200,000 rpm), while FIG. 4B shows the trend in the output value in the case where the angular velocity of the compressor wheel 62 is relatively fast (for example, speed of compressor wheel 62 is 400,000 rpm).

When using an eddy current sensor as the passage detection sensor 301, the shorter the distance between the detecting part of the passage detection sensor 301 and an object passing in front of it (in the present embodiment, a blade 622), the larger the output value. Therefore, if a blade 622 passes in front of the detecting part of the passage detection sensor 301, the output value of the passage detection sensor 301 rapidly increases. Accordingly, the output changing to a spike in FIG. 4A and FIG. 4B means the passage of a blade 622. Note that, Nos. B1 to B12 of FIG. 4A and FIG. 4B are identifying numbers of the blades 622 passing in front of the detecting part of the passage detection sensor 301.

As shown in FIG. 4A, if the angular velocity of the compressor wheel 62 is relatively slow, along with the passage of a blade 622, the output value of the passage detection sensor 301 rapidly rises and falls and the time period between passage of two adjoining blades 622 is maintained constant at a low value.

On the other hand, as shown in FIG. 4B, if the angular velocity of the compressor wheel 62 is relatively fast, before the output value of the passage detection sensor 301 which had risen along with the passage of one blade 622 falls to the lowest value, the output value of the passage detection sensor 301 starts to rise along with the passage of the next blade 622. Therefore, as shown in FIG. 4B, even in the time period between passages of two adjoining blades 622, the output value of the passage detection sensor 301 is not maintained constant. However, in this case as well, the timing where the output value of the passage detection sensor 301 becomes maximum shows the passage of a blade 622, so it is possible to accurately detect the passage of a blade 622 in front of the detecting part of the passage detection sensor 301.

One Example of Method of Calculation of Angular Velocity of Compressor Wheel Using Passage Detection Sensor

In this way, the passage detection sensor 301 can accurately detect the passage of a blade 622 in front of the detecting part of the passage detection sensor 301. For this reason, as one example of the method of calculation of the angular velocity of the compressor wheel 62 using the passage detection sensor 301, the following one may be mentioned: the method of calculating the angular velocity of the compressor wheel 62 each time a blade 622 passes in front of the passage detection sensor 301 based on the time interval from the passage of any one blade among the blades 622 (below, referred to as the "reference blade") in front of the passage detection sensor 301 to when the blade passing in front of the passage detection sensor 301 after the reference blade passes.

Below, referring to FIG. 4A, one example of the method of calculation of the angular velocity of the compressor wheel 62 using this passage detection sensor 301 will be explained.

In the example shown in FIG. 4A, the time when the output value of the passage detection sensor 301 peaks due to a first blade B1 passing in front of the passage detection sensor 301 is made the time t1. Similarly, the times when the output values of the passage detection sensor 301 peaks due to a second blade B2, a third blade B3, and a fourth blade B4 passing in front of the passage detection sensor 301 are made the times t2, t3, and t4.

In this case, the time interval $\Delta t1$ from when the first blade B1 passes in front of the passage detection sensor 301 to when the second blade B2 passes becomes t2-t1. On the other hand, in the present embodiment, 12 blades are provided at equal intervals, so the angular interval between the first blade B1 and the second blade B2 basically becomes $(2\pi/12)$[rad]. Therefore, an instantaneous angular velocity $\omega1$[rad/s] of the compressor wheel 62 from when the first blade B1 passes in front of the passage detection sensor 301 to when the second blade B2 passes (below, referred to as the "instantaneous angular velocity after passage of the first blade") becomes $2\pi/(12\times\Delta t1)$.

Similarly, the time interval $\Delta t2$ from when the second blade B2 passes in front of the passage detection sensor 301 to when the third blade B3 passes becomes t3-t2, while the time interval $\Delta t3$ from when the third blade B3 passes to when the fourth blade B4 passes becomes t4-t3. Therefore, the instantaneous angular velocity $\omega2$ of the compressor wheel 62 from when the second blade B2 passes in front of the passage detection sensor 301 to when the third blade B3 passes, that is, the instantaneous angular velocity $\omega2$ after the passage of the second blade, becomes $2\pi/(12\times\Delta t2)$. Similarly, the instantaneous angular velocity $\omega3$ of the compressor wheel 62 from when the third blade B3 passes in front of the passage detection sensor 301 to when the fourth blade B4 passes, that is, the instantaneous angular velocity $\omega3$ after the passage of the third blade, becomes $2\pi/(12\times\Delta t3)$.

Therefore, if representing the identifying number of the blade 622 by "i", if calculating the time interval $\Delta ti$ between passages of an adjoining pair of blades 622 (that is, the i-th blade Bi and (i+1)th blade B(i+1)) in front of the passage detection sensor 301 based on the output of the passage detection sensor 301, it is possible to calculate the instantaneous angular velocity $\omega i$ after passage of the i-th blade Bi based on the time interval $\Delta ti$ and the angular interval between the adjoining pair of blades 622.

Specifically, by dividing the angular interval $\alpha i$ between the adjoining pair of blades 622 like in the following formula (1) by the time interval $\Delta ti$ of passage between these blades 622, it is possible to calculate the instantaneous angular velocity $\omega i$ after passage of the i-th blade.

$$\omega i = \alpha i / \Delta ti \ \dots \ (1)$$

Further, in the case, like the present embodiment, of the compressor wheel 62 with blades 622 provided at equal intervals in the circumferential direction, if designating the total number of the blades 622 as "p", the angular interval $\alpha i$ becomes $(2\pi/p)$. Therefore, the instantaneous angular velocity $\omega i$ after passage of the i-th blade can be calculated by the following formula (2):

$$\omega i = 2\pi / (p \times \Delta ti) \ \dots \ (2)$$

In this regard, however, it will be understood that if using such a method of calculation to calculate the angular velocity of the compressor wheel 62, that is, if calculating the angular velocity of the compressor wheel 62 based on the time interval $\Delta ti$ from when the reference blade passes in front of the passage detection sensor 301 to when the blade passing in front of the passage detection sensor 301 after the reference blade passes, error arises between the actual angular velocity and the calculated angular velocity (calculation error).

Shape Error of Blades

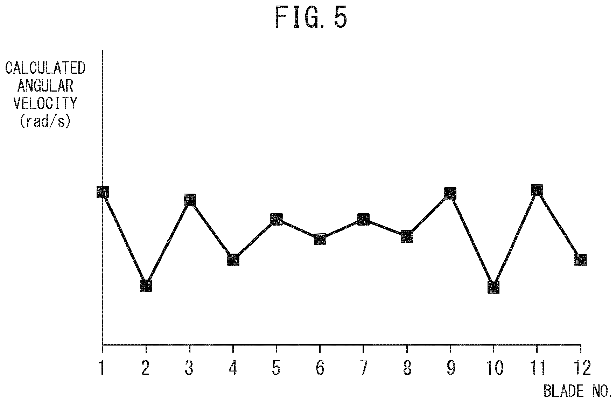

FIG. 5 is a view showing one example of the results of calculation when calculating the angular velocity of the compressor wheel 62 by the above-mentioned method of calculation if making the compressor wheel 62 rotate by a certain angular velocity. In FIG. 5, the abscissa shows the identifying numbers of the blades 622, while the ordinate shows the instantaneous angular velocity of the compressor wheel 62 after passage of the blade with the corresponding blade number.

In the example shown in FIG. 5, the compressor wheel 62 is made to rotate by a certain angular velocity. Therefore, the instantaneous angular velocity of the compressor wheel 62 calculated at this time should also become a constant value. However, in actuality, as shown in FIG. 5, the calculated instantaneous angular velocity of the compressor wheel 62 will not necessarily become constant after passage of each blade 622. For example, in the example shown in FIG. 5, the instantaneous angular velocity of the compressor wheel 62 after passage of the #2 blade becomes slower than the instantaneous angular velocity of the compressor wheel 62 after passage of the #1 blade.

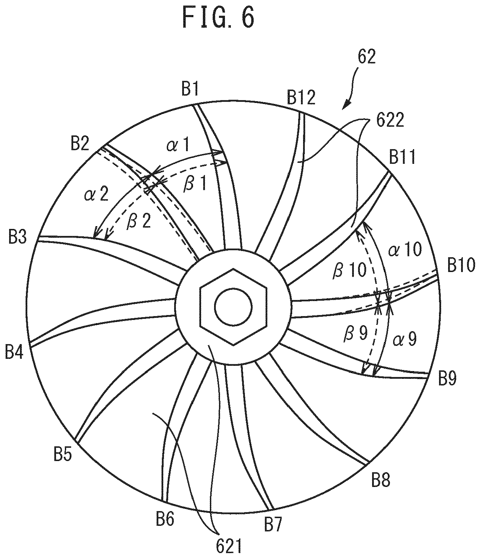

In this way, as one of the reasons why the calculated instantaneous angular velocity of the compressor wheel 62 will not become a constant value, the shape error of the blades 622 of the compressor wheel 62 (error within range of shape tolerance) may be mentioned. That is, sometimes shape error occurs in the blades 622 of the compressor wheel 62 due to manufacturing error and aging. Due to this shape error, error arises when calculating the instantaneous angular velocity of the compressor wheel 62. Below, referring to FIG. 6, the relationship between the calculated instantaneous angular velocity of the compressor wheel 62 and the shape error of the blades 622 will be explained.

FIG. 6 is a schematic plan view of a compressor wheel 62 in which shape error occurs in the blades 622. The broken line in FIG. 6 shows the shape of the blades 622 in the case where the blades 622 of the compressor wheel 62 are formed as designed. In the example shown in FIG. 6, it will be understood that the second blade B2 and the 10th blade B10 have shape error with respect to the design blade shape. Specifically, the second blade B2 becomes a shape shifted to the first blade side in the circumferential direction with respect to the design shape. Further, the 10th blade B10 becomes a shape shifted to the outside in the radial direction with respect to the design shape.

If in this way error occurs in the blade shapes, the angular interval $\alpha$ between blades changes. In the example shown in FIG. 6, the shape of the second blade B2 becomes a shape shifted in the circumferential direction with respect to the design shape. As a result, in the region facing the passage detection sensor 301, the actual angular interval between the first blade B1 and the second blade B2 becomes $\alpha 1$ smaller than the design value $\beta 1$. Conversely, the actual angular interval between the second blade B2 and the third blade B3 becomes $\alpha 2$ larger than the design value $\beta 2$. Therefore, the actual angular interval $\alpha 1$ between the first blade B1 and the second blade B2 becomes smaller than the actual angular interval $\alpha 2$ between the second blade B2 and the third blade B3.

On the other hand, in calculating the angular velocity, the design value is used rather than the actual angular intervals between blades. For this reason, even if the compressor wheel 62 rotates by a constant angular velocity, the instantaneous angular velocity $\omega 1$ of the compressor wheel 62 based on the time interval $\Delta t1$ from the first blade B1 to the second blade B2 is calculated as being faster than the instantaneous angular velocity $\omega 2$ of the compressor wheel 62 based on the time interval $\Delta t2$ from the second blade B2 to the third blade B3. As a result, as shown in FIG. 5, the instantaneous angular velocity after passage of the first blade B1 is calculated as being faster than the instantaneous angular velocity after passage of the second blade B2.

Further, in the example shown in FIG. 6, the 10th blade B10 becomes a shape shifted to the outside in the circumferential direction with respect to the design shape. As a result, the actual angular interval between the ninth blade B9 and the 10th blade B10 becomes $\alpha 9$ smaller than the design value $\beta 9$. Further, the actual angular interval between the 10th blade B10 and the 11th blade B11 becomes $\alpha 10$ larger than the design value $\beta 10$. As a result, even if the compressor wheel 62 rotates by a certain angular velocity, the instantaneous angular velocity after passage of the ninth blade B9 is calculated as one faster than the instantaneous angular velocity after passage of the 10th blade B10.

Note that, FIG. 6 shows an example of shape error when the shapes of blades 622 are shifted overall in the circumferential direction or radial direction. However, the shape error arising at the blades 622 includes error in the axial direction of the compressor wheel 62, error in the curved shapes of the blades, and various other error besides the above shape error. Further, if such shape error occurs in the blades 622, the angular velocity of the compressor wheel 62 can no longer be accurately calculated.

Measures Against Calculation Error Occurring Due to Shape Error

Therefore, in the present embodiment, rather than, like with the above-mentioned method of calculation, calculating the angular velocity of the compressor wheel 62 based on the time interval from when a reference blade passes in front of the passage detection sensor 301 to when the blade passing in front of the passage detection sensor 301 after the reference blade passes, that is, the time required for passage between adjoining blades, the angular velocity of the compressor wheel 62 is calculated based on the time interval from when the reference blade passes in front of the passage detection sensor 301 to when that reference blade again passes in front of the passage detection sensor 301, that is, the time required for the compressor wheel 62 to turn one time.

In this way, by calculating the angular velocity of the compressor wheel 62 based on the time required for the compressor wheel 62 to turn one time, even if shape error occurs in the blades 622, it is possible to calculate the angular velocity of the compressor wheel 62 without being affected by the shape error. For example, if the reference blade is made the first blade B1, as shown in the example shown in FIG. 6, even if the actual angular interval $\alpha 1$ between the first blade B1 and the second blade B2 and the actual angular interval $\alpha 9$ between the ninth blade B9 and the 10th blade B10 respectively differ from the design values $\beta 1$ and $\beta 9$, the angular interval from the first blade B1 to the first blade B1 always becomes a constant $2\pi$ [rad]. Further, even if the first blade B1 itself changes in shape, the angular interval from the first blade B1 to the first blade B1 always becomes a constant $2\pi$ [rad].

For this reason, by calculating the angular velocity of the compressor wheel 62 based on the time required for the compressor wheel 62 to turn one time, it is possible to accurately calculate the angular velocity of the compressor wheel 62 without being affected by shape error of the blades 622.

Utilization of Instantaneous Angular Velocity

Further, as a result of intensive research of the inventors, it was learned that if it is possible to accurately calculate the angular velocity of the compressor wheel 62, it becomes possible to accurately estimate the combustion state of each cylinder 10 of the engine body 1 based on the calculated angular velocity of the compressor wheel 62. Below, the method of estimating the combustion state of each cylinder 10 of the engine body 1 based on the angular velocity of the compressor wheel 62 will be explained.

Calculation of Kinetic Energy of Turbo Rotor

Inside of the turbocharger 5, the compressor wheel 62, turbine wheel 72, and shaft 8 rotate together. If these three members are referred to together as a "turbo rotor", the kinetic energy of the turbo rotor KE can be calculated by the following formula (3):

$$KE = I \times \omega^2/2 \ \dots \ (3)$$

In formula (3), "I" is the inertia moment of the turbo rotor, while "$\omega$" is the angular velocity of the turbo rotor. The inertia moment I of the turbo rotor can be found by calculations in advance etc. from the shape and material of the turbo rotor. Further, the angular velocity of the turbo rotor is equal to the angular velocity of the compressor wheel 62, so by finding the angular velocity of the compressor wheel 62, it is possible to calculate the kinetic energy of the turbo rotor at the point of time of finding the angular velocity.

Therefore, in the present embodiment, during the operation of the internal combustion engine 100, the kinetic energy of the turbo rotor is calculated by formula (3) based on the angular velocity $\omega$ of the compressor wheel 62 calculated by the amp unit 300. The amp unit 300 can accurately estimate the angular velocity $\omega$ of the compressor wheel 62 without being affected by the shape error of the compressor wheel 62, so can accurately calculate the kinetic energy of the turbo rotor.

Estimation of Combustion State

If, in this way, it is possible to accurately calculate the kinetic energy of the turbo rotor, it is possible to estimate the combustion state of each cylinder 10 such as the combustion energy generated when burning fuel in the combustion chamber of each cylinder 10 or combustion interval between cylinders based on the calculated kinetic energy. Below, the relationship between the kinetic energy of the turbo rotor and the combustion state of each cylinder 10 will be explained.

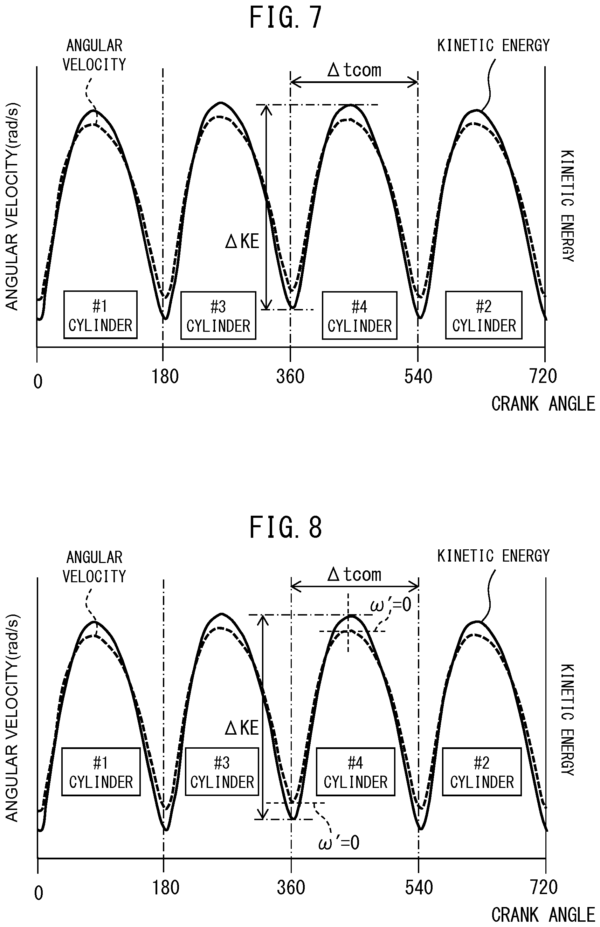

FIG. 7 is a view showing the trends in the angular velocity of the turbo rotor and the kinetic energy in one cycle of the internal combustion engine 100. The abscissa in the figure shows the crank angle of the engine body 1. The solid line in FIG. 7 shows the kinetic energy of the turbo rotor, while the broken line shows the angular velocity of the rotor.

As shown in FIG. 7, the angular velocity of the turbo rotor changes according to the crank angle of the engine body 1. In the example shown in FIG. 7, first, if the exhaust valve of the #1 cylinder opens and exhaust flows out from the combustion chamber 42, the exhaust flowing into the turbine 8 of the turbocharger 5 increases. For this reason, the angular velocity of the turbine wheel 72 increases and, along with this, the angular velocity of the compressor wheel 62 also increases. Further, along with this, the kinetic energy of the turbo rotor also increases.

After that, at the end of the exhaust stroke of the #1 cylinder, the flow rate of exhaust flowing out from the combustion chamber 42 decreases. As a result, the angular velocity of the turbine wheel 72 decreases. Along with this, the angular velocity of the compressor wheel 62 also decreases. Further, along with this, the kinetic energy of the turbo rotor decreases.

Therefore, as will be understood from FIG. 7, during the exhaust stroke of the #1 cylinder, the angular velocity of the compressor wheel 62 rises, then falls. Along with this, the kinetic energy of the turbo rotor increases, then decreases. Further, such angular velocity or kinetic energy trends in the same way in the exhaust stroke of other cylinders 10. Therefore, in a four-cylinder internal combustion engine 100, the angular velocity and kinetic energy of the turbo rotor greatly fluctuate up and down four times in one cycle of the internal combustion engine 100. That is, the angular velocity and kinetic energy of the turbo rotor fluctuate up and down several times in accordance with the number of cylinders of the internal combustion engine 100 during one cycle of the internal combustion engine 100.

Here, if considering the #4 cylinder as an example, the amount of rise of the kinetic energy of the turbo rotor during the exhaust stroke of the #4 cylinder ($\Delta KE$ in FIG. 7) is proportional to the exhaust energy of the exhaust discharged from the combustion chamber 42 of the #4 cylinder. Similarly, the amounts of rise of the kinetic energy of the turbocharger 5 during the exhaust strokes of the #1 cylinder, #3 cylinder, and #2 cylinder are proportional to the exhaust energies of the exhausts respectively discharged from the combustion chambers 42 of the #1 cylinder, #3 cylinder, and #2 cylinder. Here, the exhaust energy of the exhaust discharged from each cylinder 10 basically is proportional to the combustion energy generated when fuel is burned in the combustion chamber 42 of each cylinder 10, that is, the torque (combustion torque) generated due to combustion of fuel in the combustion chamber 42 of each cylinder 10.

Therefore, by comparing the amount of rise of the kinetic energy of the turbo rotor in the exhaust stroke of each cylinder 10 between cylinders, it is possible to detect the difference in combustion energy (combustion torque) between cylinders. Specifically, it is possible to detect the difference in combustion energy (combustion torque) between cylinders based on the difference ($\Delta KE$) between the minimum value of the kinetic energy of the rotor at the time of start of the exhaust stroke of each cylinder 10 and the maximum value of the kinetic energy of the rotor during the exhaust stroke of the cylinder 10. A cylinder 10 with a large difference between these minimum value and maximum value is judged as a cylinder 10 with a large combustion energy (combustion torque), while a cylinder 10 with a small difference between these minimum value and maximum value is judged as a cylinder 10 with a small combustion energy (combustion torque).

Further, if considering the #4 cylinder as an example, the time interval from the time of start of the exhaust stroke of the #4 cylinder to the time of end of the exhaust stroke ($\Delta tcom$ in FIG. 7), that is, the time period during which the turbo rotor is made to rotate by the exhaust discharged from the combustion chamber of the #4 cylinder, corresponds to the combustion interval from the time of start of the combustion stroke of the #2 cylinder to the time of end of the stroke. In the same way, the time intervals from the times of start of exhaust strokes of the #1 cylinder, #3 cylinder, and #2 cylinder to the times of end of the exhaust strokes respectively correspond to the combustion intervals from the times of start of the combustion strokes to the times of end of the combustion strokes of the #3 cylinder, #4 cylinder, and #1 cylinder.

Therefore, by comparing the time interval from the time of start of the exhaust stroke of each cylinder 10 to the time of end of the exhaust stroke between cylinders, it is possible to detect the difference in combustion intervals between cylinders.

If in this way it is possible to detect the difference in combustion energy (combustion torque) or the difference in combustion intervals between cylinders, for example, it is possible to control the fuel injection amount, the amount of intake air, the amount of EGR gas, and other parameters relating to combustion in the cylinders 10 by the electronic control unit 200 by feedback control or feed forward control. Due to this, it becomes possible to keep the difference in combustion energy (combustion torque) or the difference in combustion intervals between cylinders to the minimum extent.

Method of Calculation of $\Delta KE$ and $\Delta tcom$

FIG. 8 is a view for explaining the method of calculation of the combustion energy $\Delta KE$ of each cylinder 10 and the combustion interval $\Delta tcom$ of each cylinder 10. The abscissa in the figure shows the crank angle of the engine body 1. The solid line in FIG. 8 shows the kinetic energy of the turbo rotor while the broken line shows the angular velocity of the rotor.

To calculate the amount of rise of the kinetic energy of the turbo rotor during the exhaust stroke of each cylinder 10, that is, the combustion energy $\Delta KE$ generated when making fuel burn in the combustion chamber 42 of each cylinder 10, it is necessary to respectively calculate the minimum value of the kinetic energy of the turbo rotor at the time of start of the exhaust stroke of each cylinder 10 and the maximum value of the kinetic energy of the turbo rotor during the exhaust stroke of the cylinder 10.

Here, if using the #4 cylinder as an example and considering the differential value $\omega'$ of the angular velocity $\omega$ of the turbo rotor (below, referred to as the "angular acceleration") (=$d\omega/dt$; slant of broken line of FIG. 8), as shown in FIG. 8, the angular acceleration $\omega'$ becomes 0 at the time of start of the exhaust stroke of each cylinder 10 where the kinetic energy of the turbo rotor becomes the minimum value (local minimum value). Further, the angular acceleration $\omega'$ becomes 0 even at a certain time during the exhaust stroke of each cylinder 10 where the kinetic energy of the turbo rotor becomes the maximum value (local maximum value).

Therefore, each time calculating the angular velocity $\omega$ of the compressor wheel 62, the amp unit 300 according to present embodiment sets the angular velocity $\omega$ as the current angular velocity value $\omega_z$ of the turbo rotor and calculates the differential value of the current angular velocity value $\omega_z$ as the current angular acceleration value $\omega_z'$. Further the amp unit 300 sets the current angular velocity value $\omega_z$ of when the absolute value of the current angular acceleration value $\omega_z'$ becomes the preset close to 0 value of the extremal value judgment threshold or less as the angular velocity $\omega L$ at the time of start of the exhaust stroke of each cylinder 10 (below, referred to as the "local minimum angular velocity") or as the angular velocity $\omega H$ at the time during the exhaust stroke of each cylinder 10 where the kinetic energy of the turbo rotor becomes the maximum value (local maximum value) (below, referred to as the "local maximum angular velocity").

Note that, regarding the current angular velocity value $\omega_z$ when the absolute value of the current angular acceleration value $\omega_z'$ becomes the extremal value judgment threshold or less, whether the current angular velocity value $\omega_z$ is the local minimum angular velocity $\omega L$ or the local maximum angular velocity $\omega H$ can be judged by judging if the immediately preceding calculated previous angular acceleration value $\omega_{z-1}'$ is a positive value.

Specifically, if the previous angular acceleration value $\omega_{z-1}'$ is a negative value, that is, if the slant of the broken line in FIG. 8 is negative, it can be judged that the angular velocity has turned from a fall to a rise. Therefore, the amp unit 300 according to present embodiment, in this case, sets the current angular velocity value $\omega_z$ of when the absolute value of the current angular acceleration value $\omega_z'$ becomes extremal value judgment threshold or less as the local minimum angular velocity $\omega L$. On the other hand, if the previous angular acceleration value $\omega_{z-1}'$ is a positive value, that is, if the slant of the broken line of FIG. 8 is positive, it can be judged that this is a time when the angular velocity $\omega$ turns from a rise to a fall. Therefore, the amp unit 300 according to present embodiment, in this case, sets the current angular velocity value $\omega_z$ of when the absolute value of the current angular acceleration value $\omega_z'$ becomes an extremal value judgment threshold or less as the local maximum angular velocity $\omega H$.

If entering the thus set local minimum angular velocity $\omega L$ and local maximum angular velocity $\omega H$ into formula (3), it is possible to calculate the minimum value of the kinetic energy of the rotor at the time of start of the exhaust stroke of each cylinder 10 and the maximum value of the kinetic energy of the rotor during the exhaust stroke of the cylinder 10. Further, if subtracting from the thus calculated maximum value of the kinetic energy the minimum value, it is possible to calculate the combustion energy $\Delta KE$ generated when making fuel burn in the combustion chamber 42 of each cylinder 10.

Further, the combustion interval $\Delta tcom$ between cylinders, as explained above, corresponds to the time interval from the start of the exhaust stroke of each cylinder 10 to the end of the exhaust stroke. Therefore, the combustion interval $\Delta tcom$ of each cylinder 10 matches the time from when the local minimum angular velocity $\omega L$ is set to when the local minimum angular velocity $\omega L$ is next set. Therefore, the amp unit 300 according to present embodiment measures the time from when the local minimum angular velocity $\omega L$ is set to when the local minimum angular velocity $\omega L$ is next set so as to calculate the combustion interval between cylinders.

Note that, aside from this as well, for example, it is also possible to count the time from when calculating the minimum value of the kinetic energy of the turbo rotor to when next calculating the minimum value of the kinetic energy of the rotor so as to calculate the combustion interval $\Delta tcom$ of each cylinder 10.

Flow Chart of Control for Estimation of Combustion State

Below, the control for estimation of the combustion energy of each cylinder 10 and the combustion interval of each cylinder 10 of the engine body 1 utilizing the output value of the passage detection sensor 301 according to the present embodiment will be explained.

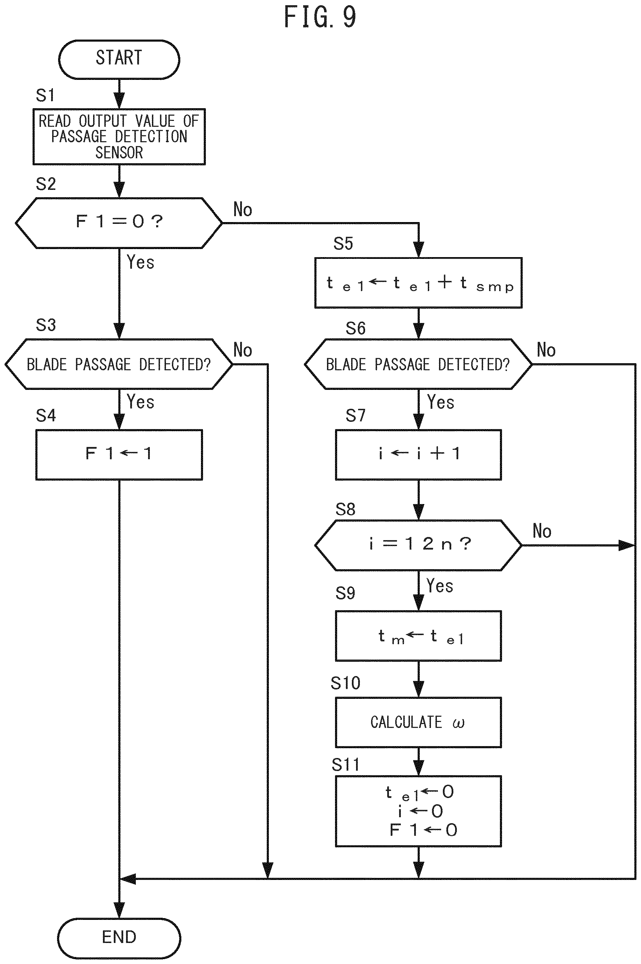

First, referring to FIG. 9, control for calculation of the angular velocity of the compressor wheel 62 which the amp unit 300 performs will be explained. The amp unit 300 repeatedly performs this routine by a predetermined processing period (=sampling period $t_{smp}$).

At step S1, the amp unit 300 reads the output value of the passage detection sensor 301.

At step S2, the amp unit 300 judges if the elapsed time counting start flag F1 has been set to "0". The elapsed time counting start flag F1 is a flag with an initial value which is set to "0". When the elapsed time counting start flag F1 is set to "0", it is set to "1" if passage of a blade 622 is detected by the passage detection sensor 301. Further, if the angular velocity and speed of the compressor wheel 62 are estimated, the flag is again returned to "0". The amp unit 300 proceeds to the processing of step S2 if the elapsed time counting start flag F1 is set to "0". On the other hand, the amp unit 300 proceeds to the processing of step S5 if the elapsed time counting start flag F1 is set to "1".

At step S3, the amp unit 300 judges if passage of a blade 622 has been detected. The blade 622 for which passage was detected at this step S3 becomes any one blade of the plurality of blades, that is, a reference blade. The amp unit 300 proceeds to the processing of step S4 if passage of a blade 622 is detected. On the other hand, the amp unit 300 ends the current processing if passage of a blade 622 is not detected.

At step S4, the amp unit 300 sets the elapsed time counting start flag F1 to "1" and starts the counting of the elapsed time $t_{e1}$ from when the reference blade passes in front of the detecting part of the passage detection sensor 301.

At step S5, the amp unit 300 calculates the previous value of the elapsed time $t_{e1}$ plus the sampling period $t_{smp}$ as the elapsed time $t_{e1}$. Note that, the initial value of the elapsed time $t_e$ is 0.

At step S6, the amp unit 300 judges if passage of a blade 622 has been detected by the passage detection sensor 301. The amp unit 300 proceeds to the processing of step S7 if passage of a blade 622 is detected by the passage detection sensor 301. On the other hand, the amp unit 300 ends the current processing if passage of a blade 622 is not detected by the passage detection sensor 301.

At step S7, the amp unit 300 calculates the number of times "i" of blade passage from when the reference blade passed in front of the detecting part of the passage detection sensor 301. Specifically, the amp unit 300 calculates the previous value of the number of times "i" of blade passage plus 1 as the number of times "i" of blade passage. Note that, the initial value of the number of times "i" of blade passage is 0.

At step S8, the amp unit 300 judges if the blade 622 for which passage was detected at step S6 is the reference blade. Specifically, the amp unit 300 judges if the number of times "i" of blade passage has become a value obtained by multiplying the total number of blades (in the present embodiment, 12) by a positive integer "n".

If setting the positive integer "n" to for, example, "1", it is possible to judge at step S8 if the compressor wheel 62 has turned one time, while if setting it to, for example, "2", it is possible to judge at step S8 if the compressor wheel 62 has turned two times. That is, it is possible to adjust the timing of estimation of the angular velocity and speed of the compressor wheel 62 in accordance with the positive integer "n" and possible to adjust the number of estimated data of the angular velocity and speed of the compressor wheel 62 per unit time. In the present embodiment, the positive integer "n" is set to "1", but the positive integer "n" may also be set to a value larger than "1" in accordance with the processing capacity etc. of the CPU of the amp unit 300.

The amp unit 300 proceeds to the processing of step S9 if the blade 622 for which passage was detected at step S6 is the reference blade. On the other hand, the amp unit 300 ends the current processing if the blade 622 for which passage was detected at step S6 is not the reference blade.

At step S9, the amp unit 300 sets the elapsed time $t_{e1}$ calculated at step S5 as the reference blade passing time $t_m$. That is, the amp unit 300 sets the positive integer "n" of the present embodiment as "1", so sets the time period from when detecting a first passage of the reference blade in front of the detecting part of the passage detection sensor 301 until when detecting the next passage of the reference blade in front of the detecting part of the passage detection sensor 301 (time required for the compressor wheel 62 to turn once) as the reference blade passing time $t_m$.

At step S10, the amp unit 300 calculates the angular velocity of the compressor wheel 62 based on the reference blade passing time $t_m$. Specifically, the amp unit 300 enters the reference blade passing time $t_m$ into the following formula (4) to calculate the angular velocity $\omega$ of the compressor wheel 62. Note that, at step S10, it is also possible to enter the reference blade passing time $t_m$ into the following formula (5) to also calculate the speed N of the compressor wheel 62.

$$\omega = 2\pi/t_m \ldots (4)$$

$$N = 60/t_m \ldots (5)$$

At step S11, the amp unit 300 returns the elapsed time $t_{e1}$, the number of times "i" of blade passage, and the elapsed time counting start flag F1 to the initial value 0.

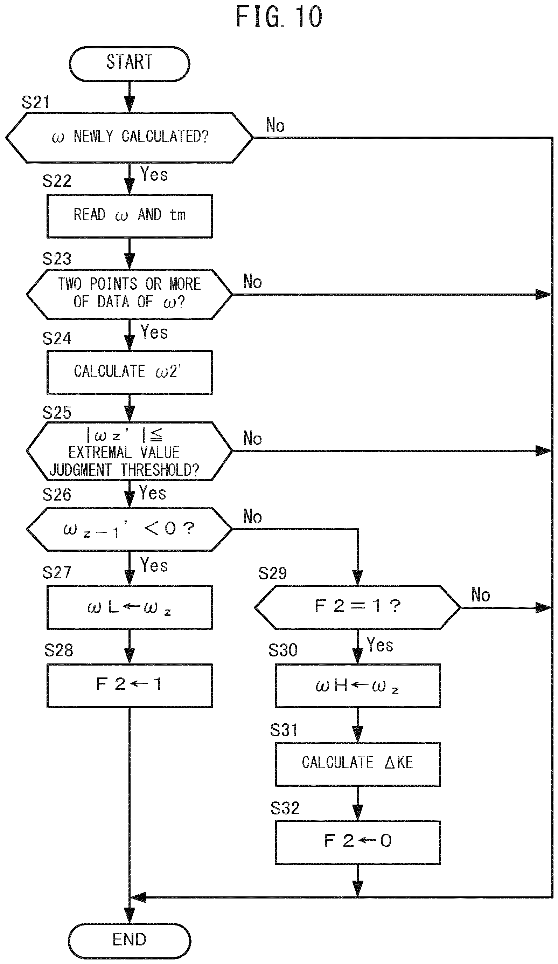

Next, referring to FIG. 10, the control for estimation of the combustion energy of each cylinder 10 of the engine body 1 which the amp unit 300 performs will be explained. The amp unit 300 repeatedly performs this routine by a predetermined processing period (=sampling period $t_{smp}$).

At step S21, the amp unit 300 judges if the angular velocity $\omega$ of the compressor wheel 62 is newly calculated by the above-mentioned control for calculation of the angular velocity of the compressor wheel 62. The amp unit 300 proceeds to the processing of step S22 if the angular velocity $\omega$ of the compressor wheel 62 is newly calculated. On the other hand, the amp unit 300 ends the current processing if the angular velocity $\omega$ of the compressor wheel 62 is not newly calculated.

At step S22, the amp unit 300 reads the newly calculated angular velocity $\omega$ of the compressor wheel 62 and the reference blade passing time $t_m$ used for the calculation.

At step S23, the amp unit 300 judges if there are two points or more of data of the angular velocity $\omega$ of the compressor wheel 62 read up to then. The amp unit 300 proceeds to the processing of step S23 if there are two points or more of data of the angular velocity $\omega$ of the compressor wheel 62 read up to then. On the other hand, the amp unit 300 ends the current processing if there are not two points or more of data of the angular velocity $\omega$ of the compressor wheel 62 read up to then.

At step S24, the amp unit 300 calculates the current angular acceleration value $\omega_z'$ of the turbo rotor. Specifically, the amp unit 300 calculates the current newly read angular velocity $\omega$ of the compressor wheel 62 as the current angular velocity value $\omega_z$ of the turbo rotor and calculates the one previously read angular velocity $\omega$ of the compressor wheel 62 as the previous angular velocity value $\omega_{z-1}$ of the turbo rotor. Further, the amp unit 300 enters into the following formula (6) the current angular velocity value $\omega_z$, the previous angular velocity value $\omega_{z-1}$, and the reference blade passing time $t_m$ read at step S22 to calculate the current angular acceleration value $\omega_z'$ of the turbo rotor.

$$\omega_z' = (\omega_z - \omega_{z-1})/t_m \ldots (6)$$

At step S25, the amp unit 300 judges if the absolute value of the current angular acceleration value $\omega_z'$ of the turbo rotor is the extremal value judgment threshold or less. The amp unit 300 proceeds to the processing of step S26 if the current angular acceleration value $\omega_z'$ of the turbo rotor is the extremal value judgment threshold or less. On the other hand, the amp unit 300 ends the current processing if the current angular acceleration value $\omega_z'$ of the turbo rotor becomes larger than the extremal value judgment threshold.

At step S26, the amp unit 300 judges if the previous angular acceleration value $\omega_{z-1}'$ of the turbo rotor is a negative value. The amp unit 300 proceeds to the processing of step S27 if the previous angular acceleration value $\omega_{z-1}'$ of the turbo rotor is a negative value. On the other hand, the amp unit 300 proceeds to the processing of step S29 if the previous angular acceleration value $\omega_{z-1}'$ of the turbo rotor is a positive value.

At step S27, the amp unit 300 sets the current angular velocity value $\omega_z$ of the turbo rotor set at step S24 as the local minimum angular velocity $\omega L$.

At step S28, the amp unit 300 sets the flag F2 at "1". The flag F2 is a flag with an initial value set at "0".

At step S29, the amp unit 300 judges if the flag F2 has been set to "1". The amp unit 300 proceeds to the processing of step S30 if the flag F2 has been set to "1". On the other hand, it ends the current processing if the flag F2 has been set to "0".

At step S30, the amp unit 300 sets the current angular velocity value $\omega_z$ of the turbo rotor set at step S24 as the local maximum angular velocity $\omega H$.

At step S31, the amp unit 300 enters into the following formula (7) the local minimum angular velocity $\omega L$ and local maximum angular velocity $\omega H$ set at step S27 and step S30 to calculate the amount of rise $\Delta KE$ of the kinetic energy of the turbo rotor, that is, the combustion energy generated when burning fuel in a combustion chamber 42 of a cylinder 10 during the current exhaust stroke:

$$\Delta KE = I \times \{(\omega H^2 - \omega L^2)/2\} \ \dots \ (7)$$

At step S32, the amp unit 300 returns the flag F2 to the initial value of "0".

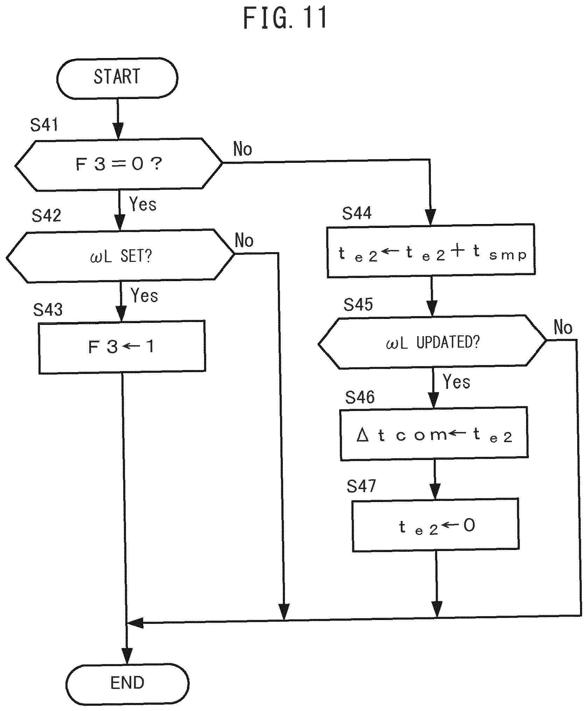

Next, referring to FIG. 11, the control for estimation of the combustion interval of each cylinder 10 of the engine body 1 performed by the amp unit 300 during the operation of the internal combustion engine 100 will be explained. The amp unit 300 repeatedly performs this routine by a predetermined processing period (=sampling period $t_{smp}$).

At step S41, the amp unit 300 judges if the flag F3 has been set to 0. The flag F3 is a flag with an initial value (value at start of operation of the internal combustion engine 100) set to "0". It is set to "1" when the local minimum angular velocity $\omega L$ is first set after the start of the operation of the internal combustion engine 100. The flag F3 is returned to "0" at the time of stopping the operation of the internal combustion engine or the time of starting the operation. The amp unit 300 proceeds to the processing of step S42 if the flag F3 is set to "0". On the other hand, the amp unit 300 proceeds to the processing of step S44 if the flag F3 is set to "1".

At step S42, the amp unit 300 judges if the local minimum angular velocity $\omega L$ has first been set from the start of the operation of the internal combustion engine 100. Specifically, the amp unit 300 judges if the local minimum angular velocity $\omega L$ has been set after first proceeding to step S27 of the above-mentioned control for estimation of the combustion energy after the start of the operation of the internal combustion engine 100. The amp unit 300 proceeds to the processing of step S43 if the local minimum angular velocity $\omega L$ has been set after first proceeding to step S27 of the above-mentioned control for estimation of the combustion energy after the start of the operation of the internal combustion engine 100. On the other hand, the amp unit 300 ends the current processing if it does not proceed to step S27 of the above-mentioned control for estimation of the combustion energy after start of the operation of the internal combustion engine 100 and the local minimum angular velocity $\omega L$ is still not set.

At step S43, the amp unit 300 sets the flag F3 at "1" and starts counting the elapsed time $t_{e2}$ from when the angular velocity of the turbo rotor becomes the local minimum angular velocity.

At step S44, the amp unit 300 calculates the cumulative value of the previous value of the elapsed time $t_{e2}$ plus the sampling period $t_{smp}$ as the elapsed time $t_{e2}$. Note that, the initial value of the elapsed time $t_{e2}$ is 0.

At step S45, the amp unit 300 judges if the local minimum angular velocity $\omega L$ has been changed. The amp unit 300 proceeds to the processing of step S46 if the local minimum angular velocity $\omega L$ has been changed. On the other hand, the amp unit 300 ends the current processing if the local minimum angular velocity $\omega L$ is not updated.

At step S46, the amp unit 300 calculates the elapsed time $t_{e2}$ calculated at step S44 as the combustion interval $\Delta tcom$.

At step 47, the amp unit 300 returns the elapsed time $t_{e2}$ to the initial value 0 and again starts to count the elapsed time $t_{e2}$ from when the angular velocity of the turbo rotor becomes the local minimum angular velocity.

The internal combustion engine 100 according to the present embodiment explained above comprises an engine body 1 having a plurality of cylinders 10, a compressor wheel 62 driven by energy of exhaust discharged from each cylinder 10 of the engine body 1, having at least one blade 622, and compressing air taken into each cylinder 10 of the engine body 1, a passage detection sensor 301 for detecting a predetermined position in a housing 61 holding the compressor wheel 62 being passed by a blade 622 of the compressor wheel 62, an amp unit 300 (combustion state estimating device) configured to calculate an angular velocity of the compressor wheel 62 based on the results of detection of the passage detection sensor 301 and to calculate at least one of the combustion energy of each cylinder 10 of the engine body 1 and combustion interval of each cylinder 10 based on the angular velocity of the compressor wheel 62, and an electronic control unit 200 (control device) configured to control a parameter relating to combustion in each cylinder 10 of the engine body 1 (at least one of an amount of fuel, amount of air, or amount of EGR gas) based on at least one of the combustion energy of each cylinder 10 and combustion interval of each cylinder 10 calculated by the amp unit 300.

Therefore, according to the present embodiment, there is no need for the electronic control unit 200 to calculate the combustion energy of each cylinder 10 or the combustion interval of each cylinder 10. The electronic control unit 200 can also utilize the combustion energy of each cylinder 10 or the combustion interval of each cylinder 10 calculated by the amp unit 300 to control a parameter relating to the combustion at each cylinder 10 of the engine body 1. For this reason, compared to when the electronic control unit 200 is used to calculate at least one of the combustion energy of each cylinder 10 or the combustion interval of each cylinder 10, it is possible to keep down the processing load of the electronic control unit 200 while controlling a parameter relating to combustion in each cylinder 10 of the engine body 1 based on at least one of the combustion energy of each cylinder 10 or the combustion interval of each cylinder 10.

Further, the amp unit 300 according to present embodiment is configured to calculate the elapsed time from when any one blade among the blades passes a predetermined position one time as the reference blade passing time each time that any one blade passes the predetermined position a predetermined number of times and to calculate the angular velocity of the compressor wheel 62 based on the reference blade passing time and the number of times any one blade passes a predetermined position during the reference blade passing time.

For this reason, it is possible to precisely calculate the angular velocity of the compressor wheel 62 without being affected by shape error of the blades. Therefore, it is possible to precisely calculate the combustion energy of each cylinder 10 or the combustion interval of each cylinder 10 of the engine body 1 calculated based on the angular velocity of the compressor wheel 62.

Further, the amp unit 300 according to present embodiment is configured to calculate the differential value of the angular velocity, that is, the angular acceleration, based on the angular velocity of the compressor wheel 62 and to calculate the combustion energy of the cylinder 10 during the exhaust stroke based on the angular velocity of the compressor wheel 62 when the absolute value of the angular acceleration becomes a predetermined extremal value judgment threshold or less. More specifically, the amp unit 300 according to present embodiment is configured to set the angular velocity of the compressor wheel 62 when the absolute value of the angular acceleration becomes the predetermined extremal value judgment threshold or less as the local minimum angular velocity if the previous value of the angular acceleration is a negative value, to set the angular velocity of the compressor wheel 62 when the absolute value of the angular acceleration becomes the predetermined extremal value judgment threshold or less as the local maximum angular velocity if the previous value of the angular acceleration is a positive value, and to calculate the combustion energy of the cylinder 10 during the exhaust stroke based on the local minimum angular velocity and the local maximum angular velocity.

Due to this, according to the present embodiment, it is possible to precisely calculate the combustion energy of each cylinder 10 from the angular velocity of the compressor wheel 62 calculated by the amp unit 300.

Further, the amp unit 300 according to present embodiment is configured to calculate the combustion interval of each cylinder 10 based on the time period from when the local minimum angular velocity is set to when the local minimum angular velocity is updated.

Due to this, according to the present embodiment, it is possible to precisely calculate the combustion interval of each cylinder 10 from the angular velocity of the compressor wheel 62 calculated by the amp unit 300.

Above, embodiments of the present invention were explained, but the above embodiments only shown some of the examples of application of the present invention and are not intended to limit the technical scope of the present invention to the specific constitutions of the embodiments.

Note that, in the above embodiments, as one example of a rotor, a compressor wheel 62 of a compressor 6 of a turbocharger 5 was mentioned, but the angular velocity can be calculated for any rotor so long as a rotor having blades 622. Therefore, for example, it is also possible to calculate the angular velocity of an axial flow type compressor etc.

Further, in the above embodiments, fuel was burned in the engine body 1 by compression ignition and at least one of the amount of fuel, amount of air, or amount of EGR gas was controlled as a parameter relating to combustion in the cylinders 10 of the engine body 1, but if burning fuel in the engine body 1 by spark ignition, it is also possible to further control the ignition timing as a parameter relating to combustion in the cylinders 10 of the engine body 1.

REFERENCE SIGNS LIST

100. internal combustion engine
1. engine body
61. compressor housing (housing)
62. compressor wheel
622. blade
200. electronic control unit (control device)
300. amp unit (combustion state estimating device)
301. passage detection sensor

**Claims**

1. An internal combustion engine comprising:

an engine body having a plurality of cylinders;
a compressor wheel driven by energy of exhaust discharged from each cylinder of the engine body, having at least one blade, and compressing air taken into each cylinder of the engine body;

a passage detection sensor for detecting a predetermined position in a housing holding the compressor wheel being passed by a blade of the compressor wheel;

a combustion state estimating device configured to calculate an angular velocity of the compressor wheel based on the results of detection of the passage detection sensor and to calculate at least one of the combustion energy of each cylinder of the engine body and combustion interval of each cylinder based on the angular velocity of the compressor wheel; and

a control device configured to control a parameter relating to combustion in each cylinder of the engine body based on at least one of the combustion energy of each cylinder and combustion interval of each cylinder calculated by the combustion state estimating device.

2. The internal combustion engine according to claim 1, wherein
the combustion state estimating device is configured to:

calculate a differential value of the angular velocity of angular acceleration based on the angular velocity of the compressor wheel; and
calculate the combustion energy of the cylinder during an exhaust stroke based on the angular velocity of the compressor when the absolute value of the angular acceleration becomes a predetermined extremal value judgment threshold or less.

3. The internal combustion engine according to claim 2, wherein
the combustion state estimating device is configured to:

set the angular velocity of the compressor wheel when the absolute value of the angular acceleration has become a predetermined extremal value judgment threshold or less as a local minimum angular velocity if the previous value of the angular acceleration is a negative value;
set the angular velocity of the compressor wheel when the absolute value of the angular acceleration has become a predetermined extremal value judgment threshold or less as a local maximum angular velocity if the previous value of the angular acceleration is a positive value; and
calculate a combustion energy of a cylinder during an exhaust stroke based on the local minimum angular velocity and the local maximum angular velocity.

4. The internal combustion engine according to claim 3, wherein
the combustion state estimating device is configured to calculate a combustion interval between cylinders based on a time period from when the local minimum angular velocity is set to when the local minimum angular velocity is updated.

5. The internal combustion engine according to any one of claims 1 to 4, wherein
the combustion state estimating device is configured to:

calculate an elapsed time from when any one blade among the blades passes a predetermined position once as a reference blade passing time each time the any one blade passes the predetermined position a predetermined number of times; and
calculate the angular velocity of the compressor wheel based on the reference blade passing time and the number of times the any one blade passes the predetermined position during the reference blade passing time.

6. The internal combustion engine according to any one of claims 1 to 5, wherein
the engine body is configured to make fuel burn in each cylinder by compression ignition, and
the control device is configured to control at least one of the amount of fuel, amount of air, and amount of EGR gas supplied to each cylinder as a parameter relating to combustion in each cylinder of the engine body.

7. The internal combustion engine according to any one of claims 1 to 5, wherein
the engine body is configured to make fuel burn in each cylinder by spark ignition, and
the control device is configured to control at least one of the amount of fuel, amount of air, and amount of EGR gas supplied to each cylinder and ignition timing for igniting fuel in each cylinder as a parameter relating to combustion in each cylinder of the engine body.

# FIG. 1

# FIG. 2A

FIG. 2B

FIG. 3

# FIG. 4A

OUTPUT

Δt1　Δt2　Δt3

B1　B2　B3　B4　B5　B6　B7　B8

t1　t2　t3　t4

TIME

# FIG. 4B

OUTPUT

Δt1　　　　　　　　Δt12

B1　　B3　　B5　　B7　　B9　　B11　　B1　　B3
　B2　　B4　　B6　　B8　　B10　　B12　　B2

TIME

# FIG. 5

# FIG. 6

# FIG. 7

# FIG. 8

# FIG. 9

START

S1
READ OUTPUT VALUE OF
PASSAGE DETECTION
SENSOR

S2
$F1=0$ ? — No →

Yes

S5
$t_{e1} \leftarrow t_{e1} + t_{smp}$

S3
BLADE PASSAGE DETECTED? — No →

Yes

S4
$F1 \leftarrow 1$

S6
BLADE PASSAGE DETECTED? — No →

Yes

S7
$i \leftarrow i + 1$

S8
$i = 12n$ ? — No →

Yes

S9
$t_m \leftarrow t_{e1}$

S10
CALCULATE $\omega$

S11
$t_{e1} \leftarrow 0$
$i \leftarrow 0$
$F1 \leftarrow 0$

END

# FIG. 10

```
                    ┌─────────────┐
                    │    START    │
                    └─────────────┘
                           │
  S21                      ▼                        No
      ⟨ ω  NEWLY CALCULATED? ⟩ ──────────────────────────┐
                           │ Yes                          │
  S22                      ▼                              │
      ┌─────────────────────────┐                        │
      │   READ ω AND tm          │                        │
      └─────────────────────────┘                        │
  S23                      ▼                        No    │
      ⟨ TWO POINTS OR MORE                                │
        OF DATA OF ω? ⟩ ──────────────────────────────────┤
                           │ Yes                          │
  S24                      ▼                              │
      ┌─────────────────────────┐                        │
      │   CALCULATE ω2'          │                        │
      └─────────────────────────┘                        │
  S25                      ▼                        No    │
      ⟨ |ω z'| ≦                                          │
        EXTREMAL VALUE                                    │
        JUDGMENT THRESHOLD? ⟩ ────────────────────────────┤
                           │ Yes                          │
  S26                      ▼              No              │
      ⟨ ω z−1' < 0 ? ⟩ ──────────┐                        │
                           │ Yes  │                       │
  S27                      ▼      ▼ S29           No      │
      ┌──────────────┐  ⟨ F2 = 1 ? ⟩ ──────────────────────┤
      │  ω L ← ω z    │        │ Yes                       │
      └──────────────┘        ▼ S30                        │
  S28           │      ┌──────────────┐                   │
                ▼      │  ω H ← ω z    │                   │
      ┌──────────────┐ └──────────────┘                   │
      │  F 2 ← 1      │        │ S31                       │
      └──────────────┘        ▼                           │
                │      ┌──────────────┐                   │
                │      │ CALCULATE △KE │                   │
                │      └──────────────┘                   │
                │             │ S32                       │
                │             ▼                           │
                │      ┌──────────────┐                   │
                │      │  F 2 ← 0      │                   │
                │      └──────────────┘                   │
                │             │                           │
                ◄─────────────┴───────────────────────────┘
                ▼
      ┌─────────────┐
      │     END     │
      └─────────────┘
```

## FIG. 11

START

S41

$F3 = 0$ ? → No

Yes

S42

$\omega L$ SET? → No

Yes

S43

$F3 \leftarrow 1$

S44

$t_{e2} \leftarrow t_{e2} + t_{smp}$

S45

$\omega L$ UPDATED? → No

Yes

S46

$\Delta t com \leftarrow t_{e2}$

S47

$t_{e2} \leftarrow 0$

END

**INTERNATIONAL SEARCH REPORT**

| International application No. |
| --- |
| PCT/JP2015/085260 |

| A. CLASSIFICATION OF SUBJECT MATTER |
| --- |
| *F02D45/00*(2006.01)i, *F02D23/00*(2006.01)i |

According to International Patent Classification (IPC) or to both national classification and IPC

| B. FIELDS SEARCHED |
| --- |

Minimum documentation searched (classification system followed by classification symbols)
F02D45/00, F02D23/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y<br>A | JP 2015-197074 A (Toyota Motor Corp.),<br>09 November 2015 (09.11.2015),<br>paragraphs [0011] to [0029]; fig. 1 to 6<br>(Family: none) | 1-3,5-7<br>4 |
| Y | JP 2008-14656 A (Denso Corp.),<br>24 January 2008 (24.01.2008),<br>paragraph [0020]<br>(Family: none) | 1-3,5-7 |
| Y | JP 2002-98584 A (Mitsubishi Heavy Industries, Ltd.),<br>05 April 2002 (05.04.2002),<br>paragraph [0028]<br>(Family: none) | 5-7 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 February 2016 (04.02.16) | 16 February 2016 (16.02.16) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2015/085260

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-132423 A  (Toyota Motor Corp.), 12 July 2012 (12.07.2012), paragraphs [0018] to [0044]; fig. 1 to 4 (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015034780 A